# EUROPEAN PATENT APPLICATION

(11) **EP 4 741 681 A1**
(43) Date of publication of application: **13.05.2026**
(21) Application number: 25208288.8
(22) Date of filing: 13.10.2025
(51) Int. Cl.: F16H 1/28, B60K 1/00, F16H 57/08, F16H 37/08, F16H 48/08

(54) **POWER TRANSMISSION DEVICE**

(30) Priority: 07.11.2024 JP 2024195119
(71) Applicant: TOYOTA JIDOSHA KABUSHIKI KAISHA, Toyota-shi, Aichi-ken 471-8571 (JP)
(72) Inventor: SEKIGUCHI, Yoshito, Toyota-shi, 471-8571 (JP)
(74) Representative: D Young & Co LLP

(57) **Abstract**

A planetary gear mechanism may include a sun gear fixed to a shaft, a ring gear located coaxially with the sun gear and fixed to a case, a planetary gear meshed with the sun gear and the ring gear, and a carrier configured to rotatably support the planetary gear. A helix angle of teeth of the sun gear and a helix angle of teeth of the ring gear may be set so that a thrust force acting on the sun gear and a thrust force acting on the ring gear are in opposite directions. A power transmission device may include a load transmission path between the sun gear and the ring gear, through which the thrust force acting on the sun gear and the thrust force acting on the ring gear are transmitted, and the load transmission path may include at least a portion of the carrier.

## Description

### CROSS REFERENCE TO RELATED APPLICATIONS

This application claims priority from Japanese Patent Application No. 2024-195119 filed on November 7, 2024. The entire content of the priority application is incorporated herein by reference.

### TECHNICAL FIELD

The art disclosed herein relates to a power transmission device comprising a planetary gear mechanism and a case housing the planetary gear mechanism.

### BACKGROUND ART

As one of power transmission devices, Japanese Patent Application Publication No. 2021-110374 describes a transaxle configured to transmit power of an electric machine to an axle via a planetary gear reduction drive and a differential device. According to Japanese Patent Application Publication No. 2021-110374, the planetary gear reduction drive uses a sun gear arranged on an output shaft of the electric machine as an input element, a ring gear fixed to a case housing the planetary gear reduction drive as a reaction element, and a carrier as an output element. The carrier supports stepped pinions each of which includes a large-diameter pinion meshed with the sun gear and a small-diameter pinion meshed with the ring gear so that the stepped pinion rotates about its axis and revolves around the sun gear.

Japanese Patent Application Publication No. 2021-110374 describes that each gear constituting the planetary gear reduction drive is a helical gear.

### SUMMARY

In the above-mentioned planetary gear mechanism, since the ring gear is a helical gear, the ring gear is subjected to a thrust force. The thrust force to which the ring gear is subjected would be received by the case to which the ring gear is fixed. Accordingly, rigidity of the case needs to be ensured in order to receive the thrust force acting on the ring gear, which resulted in problems that a thickness and/or size of the case are increased.

A power transmission device may comprise a planetary gear mechanism and a case housing the planetary gear mechanism, wherein the planetary gear mechanism may comprise: a sun gear fixed to a shaft configured to rotate; a ring gear located coaxially with the sun gear and fixed to the case; a planetary gear meshed with the sun gear and the ring gear; and a carrier configured to rotatably support the planetary gear, the carrier being located coaxially with the sun gear and supported rotatably with respect to the case. The sun gear and the ring gear may be each a helical gear, a helix angle of teeth of the sun gear and a helix angle of teeth of the ring gear are set so that a thrust force acting on the sun gear and a thrust force acting on the ring gear are in opposite directions. The power transmission device may further comprise a load transmission path between the sun gear and the ring gear, through which the thrust force acting on the sun gear and the thrust force acting on the ring gear are transmitted, and the load transmission path may include at least a portion of the carrier.

According to this configuration, the thrust force acting on the ring gear and the thrust force acting on the sun gear and oriented opposite from the thrust force acting on the ring gear are both transmitted to the load transmission path. Accordingly, at least a portion of the thrust force acting on the ring gear is cancelled by the thrust force acting on the sun gear. Due to this, the rigidity required for the case to have to receive the trust force acting on the ring gear is decreased, as a result of which the size increase of the case can be suppressed. Further, because the load transmission path is configured with at least a portion of the carrier included, the number of parts for providing the load transmission path can be suppressed from being increased.

In one aspect of the present teachings, the load transmission path may include a first bearing interposed on a path between the sun gear and the carrier and a second bearing interposed on a path between the ring gear and the carrier. According to the above configuration, because the first bearing and the second bearing are used to constitute the load transmission path, the load transmission path can be configured to ensure smooth rotation of the sun gear and/or carrier and suppress the number of parts from increasing.

In one aspect of the present teachings, the carrier may be connected to a differential case housing a differential gear, and the first bearing may be sandwiched between the sun gear and the differential case. According to the above configuration, in this type of power transmission devices in which the carrier is connected to the differential case which houses the differential gear, the load transmission path can be simply configured by utilizing the differential case.

In one aspect of the present teachings, the load transmission path may include a structure extending from the ring gear, and the second bearing may be sandwiched between the structure and the carrier. According to the above configuration, by utilizing the structure to constitute the load transmission path, the load transmission path can be easily configured.

In one aspect of the present teachings, the structure may be integrally molded with the ring gear. By pre-shaping the ring gear in a shape including the structure, the structure as an independent member can be omitted, and thus assembly of the power transmission device can be simplified.

In one aspect of the present teachings, the planetary gear may be a stepped pinion having a large-diameter pinion meshed with the sun gear on one side in an axial direction parallel to the shaft and a small-diameter pinion meshed with the ring gear on another side in the axial direction, and the load transmission path may be provided on the other (another) side of the large-diameter pinion in the axial direction. According to the above configuration, by utilizing the shape of the planetary gear, which is a stepped pinion, the load transmission path can be configured simple and compact, by which the size of the case housing the load transmission path can be suppressed from being increased.

In one aspect of the present teachings, the helix angle of the teeth of the sun gear and the helix angle of the teeth of the ring gear are set so that a magnitude of the thrust force acting on the sun gear and a magnitude of the thrust force acting on the ring gear are equal to each other. According to the above configuration, the thrust force acting on the sun gear and the thrust force acting on the ring gear can be, ideally, completely cancelled by each other, by which the thrust force inputted from the ring gear to the case can be made zero.

### BRIEF DESCRIPTION OF DRAWINGS

FIG. 1 illustrates a simplified diagram of a configuration of a power transmission device.
FIG. 2 illustrates a simplified perspective view of an outer appearance of a case and contents within the case.
FIG. 3 illustrates a partial cross-sectional view primarily showing a planetary gear mechanism within the case.
FIG. 4 illustrates a simplified side view of a vehicle in which the power transmission device is mounted.

### DETAILED DESCRIPTION

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the disclosure. Furthermore, each of the additional features and teachings disclosed below may be utilized separately or in conjunction with other features and teachings to provide improved power transmission devices, as well as methods for using and manufacturing the same.

Moreover, combinations of features and steps disclosed in the following detailed description may not be necessary to practice the disclosure in the broadest sense, and are instead taught merely to particularly describe representative examples of the disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

With reference to drawings, an embodiment will be described. Respective drawings are only exemplary, and the present embodiment is not limited to the illustrated contents. Since the drawings are merely exemplary, some parts may be omitted.

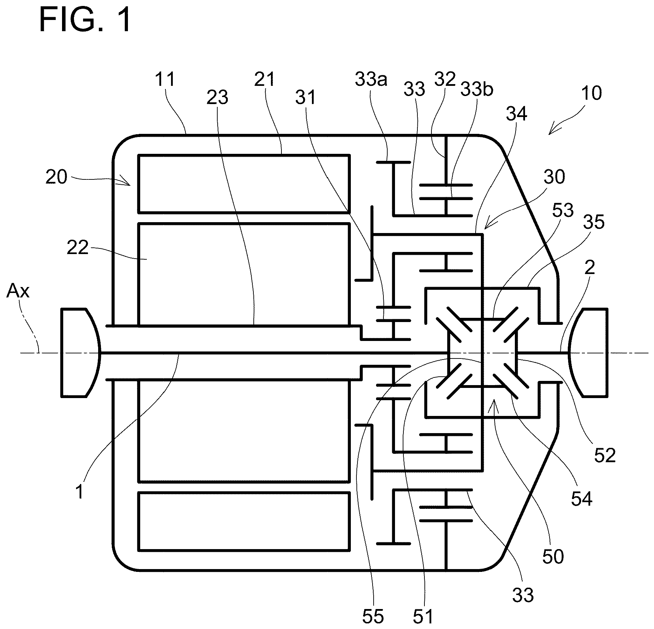

FIG. 1 illustrates a simplified view of a configuration of a power transmission device 10 in a skeleton view. A case 11 primarily contains a motor 20, a planetary gear mechanism 30 and a differential gear 50. The power transmission device 10 includes the planetary gear mechanism 30 and the case 11. The concept of the power transmission device 10 may include, for example, both or one of the motor 20 and the differential gear 50.

The motor 20 includes a cylindrical stator 21 fixed within the case 11 and a rotor 22 and a rotor shaft 23 that are disposed inside the stator 21 in a radial direction. The rotor 22 and the rotor shaft 23 are supported so that they are configured to rotate about an axis Ax. As is well-known, the stator 21 has an unillustrated coil wrapped therearound, and the rotor 22 and the rotor shaft 23 rotate about the axis Ax by way of magnetic field generated by the coil being supplied with electric power. A direction parallel to the axis Ax will be referred to as "axial direction".

The rotor shaft 23 has one end in the axial direction to which a sun gear 31 is fixed. That is, the sun gear 31 is fixed to the rotor shaft 23 and rotates together with the rotor shaft 23. The rotor shaft 23 is an example for a shaft configured to rotate relative to the case 11.

The planetary gear mechanism 30 includes the sun gear 31, a ring gear 32, planetary gears 33, and a carrier 34. The ring gear 32 is disposed coaxially with the rotor shaft 23, and is fixed to the case 11. Each of the planetary gears 33 meshes with both the sun gear 31 and the ring gear 32, and is configured to rotate about its axis (rotation) and revolve around the sun gear 31 (revolution). The revolving motion of the planetary gears 33 is an orbital motion around the axis Ax. In an example of FIG. 1, for convenience, the planetary gears 33 are shown at upper and lower respective positions with the axis Ax interposed therebetween. The number of the planetary gears 33 in the planetary gear mechanism 30 is not limited in particular, but may be three, for example.

The carrier 34 rotatably supports the planetary gears 33. Also, the carrier 34 is disposed coaxially with the sun gear 31 and the ring gear 32, and is supported rotatably relative to the case 11. Due to this, the carrier 34 is configured to rotate about the axis Ax accompanying the revolving motion of the planetary gears 33. That is, the carrier 34 is a rotary element which supports each of the planetary gears 33 so that each planetary gear 33 can rotate, and is also a rotary element that extracts the revolving motion of the planetary gears 33 as its output.

According to FIG. 1, each of the planetary gears 33 is a stepped pinion with a large-diameter pinion 33a meshed with the sun gear 31 on one side in the axial direction (left in FIG. 1) and a small-diameter pinion 33b meshed with the ring gear 32 on the other side in the axial direction (right in FIG. 1). The terms "large-diameter" and "small-diameter" are relative expressions, merely intending to mean that the small-diameter pinion 33b has a smaller diameter than the large-diameter pinion 33a.

According to FIG. 1, the carrier 34 is connected to a differential case 35 housing the differential gear 50. The differential case 35 is located on the opposite side from the motor 20 with respect to the sun gear 31 in the axial direction. The differential gear 50 may be abbreviated as "def". In the differential case 35, as the differential gear 50, left and right side gears 51, 52 connected with left and right drive shafts 1, 2 and pinions 53, 54 meshed with the side gears 51, 52 are housed. The drive shafts 1, 2 are both disposed on the axis Ax, and each of the shafts 1, 2 is connected to corresponding one of unillustrated left and right wheels that are outside the case 11. In the example of FIG. 1, the rotor shaft 23 is tubular and hollow, and the left drive shaft 1 of the drive shafts 1, 2 extends through the rotor shaft 23 and protrudes outside the case 11.

The side gear 51 connected to the drive shaft 1 and the side gear 52 connected to the drive shaft 2 are opposed to each other on the same axis, and a pinion shaft 55 is inserted between the side gears 51 and 52 along the radial direction perpendicular to the axial direction. The pinion shaft 55 is fixed inside the differential case 35. The pinion shaft 55 has a pair of the pinions 53, 54 opposed to each other in the radial direction, inserted therethrough as bearings for the pinion shaft 55.

How power is transmitted in the power transmission device 10 as such will schematically be described. Rotary power of the rotor shaft 23 is transmitted to the planetary gears 33 with the rotation of the sun gear 31 as an input therefor. With such input transmitted to the planetary gears 33, each of the planetary gears 33 rotates, and also is subjected to a reaction force of the fixed ring gear 32, resulting the planetary gear 33 revolving along the inner circumference of the ring gear 32. The revolving motion of the planetary gears 33 is outputted as rotation of the carrier 34. In the differential case 35 which rotates integrally with the carrier 34, the power is transmitted from the pinions 53, 54 to the side gears 51, 52, and thus the side gears 51, 52 are driven, by which the drive shafts 1, 2 rotate.

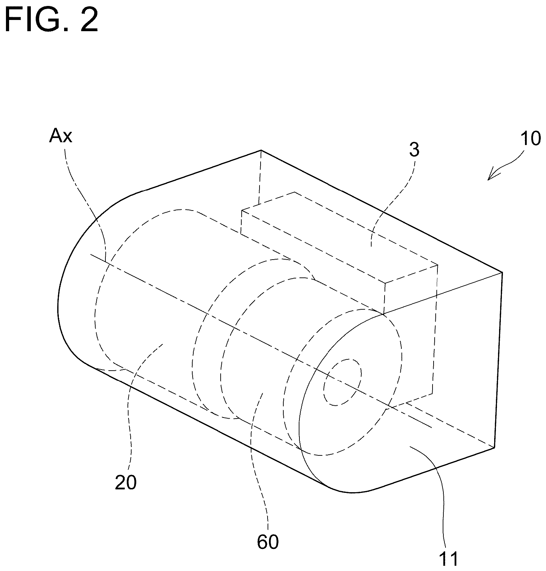

FIG. 2 illustrates a simplified perspective view of an outer appearance of the case 11 and contents within the case 11. In the case 11, the motor 20 and a gear set 60 are housed in a manner that the motor 20 and the gear set 60 are aligned in the axial direction. In FIG. 2, a configuration including the planetary gear mechanism 30 and the differential gear 50 is collectively shown as the gear set 60. Further, as shown in FIG. 2, the case 11 may house an inverter 3. The inverter 3 is configured to drive the motor 20 by converting a direct current supplied from a power supply outside the case 11 to an alternating current and supplying the same to the motor 20. Inside of the case 11 may be suitably sectioned into a plurality of chambers so as to house respective things such as the inverter 3, the motor 20, and the gear set 60.

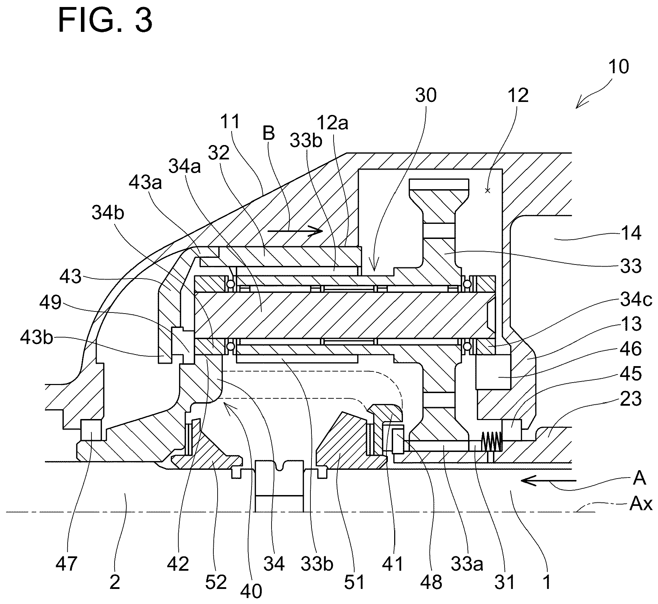

FIG. 3 mainly illustrates the planetary gear mechanism 30 housed in a first chamber 12 within the case 11 in a partial cross-sectional view. Layout and/or shapes of the respective features shown in FIG. 3 are not necessarily the same as the layout and/or shapes of the respective features shown in FIG. 1, but this inconsistency is not problematic for understanding the present embodiment. For example, the "one side" in the axial direction is the left side in FIG. 1, but in FIG. 3 it is the right side. The "other side" in the axial direction is the right in FIG. 1, but in FIG. 3, it is the left side. In FIG. 3, an area of the first chamber 12 that is above the axis Ax is mainly illustrated. According to FIG. 3, the space within the case 11 is sectioned by a partition 13, which is a part of the case 11, into the first chamber 12 and a second chamber 14 in the axial direction. Although this is omitted in FIG. 3, the motor 20 is housed in the second chamber 14.

The rotor shaft 23 is rotatably supported by a bearing 45 fixed to the partition 13. The sun gear 31 is fixed to an end of the rotor shaft 23 which extends farther than the partition 13 and enters the first chamber 12. The relationship between the planetary gears 33 as stepped pinions with the large-diameter pinions 33a and the small-diameter pinions 33b, the sun gear 31, and the ring gear 32 was described above. The ring gear 32 has its outer circumferential surface fixed to an inner surface 12a which defines the first chamber 12.

How the carrier 34 supports the planetary gears 33 is not particularly limited. The carrier 34 comprises, for example, a plurality of supporting shafts 34a which is parallel to the axial direction. The number of the supporting shafts 34a is equal to the number of the planetary gears 33. Each supporting shaft 34a extends through a center of corresponding one of the planetary gears 33. Each planetary gear 33 is configured to rotate about the corresponding supporting shaft 34a. Also, according to the example of FIG. 3, for each supporting shaft 34a, the carrier 34 comprises bosses 34b, 34c disposed at both opposing ends of the supporting shaft 34a and which are configured to restrict the corresponding planetary gear 33 from moving in the axial direction and which support the supporting shaft 34a.

The carrier 34 which includes the supporting shafts 34a and the bosses 34b, 34c rotates about the axis Ax. On the one side in the axial direction (right in FIG. 3), the carrier 34 is rotatably supported by a bearing 46 disposed between the bosses 34c and the partition 13. On the other hand, on the other side in the axial direction (left in FIG. 3), the carrier 34 is rotatably supported by a bearing 47 disposed between an end of the carrier 34 and the case 11.

The sun gear 31 and the ring gear 32 are both helical gears. The helical gears are gears teeth (profiles) of which are skewed (angled) relative to the axis of the gear. The respective planetary gears 33 which are meshed with both the sun gear 31 and the ring gear 32 may be construed as helical gears. In the present embodiment, the helix angle of the teeth of the sun gear 31 and the helix angle of the teeth of the ring gear 32 are set so that a thrust force acting on the sun gear 31 and a thrust force acting on the ring gear 32 are in opposite directions from each other.

A thrust force is a load applied in a direction parallel to the axial direction. That is, in the planetary gear mechanism 30, the helical gears are designed so that the orientation of a thrust force acting on the sun gear 31 when the sun gear 31 and the planetary gears 33 are meshed and the orientation of another thrust force acting on the ring gear 32 when the ring gear 32 and the planetary gears 33 are meshed are in opposite directions from each other. In FIG. 3, the orientation of the thrust force acting on the sun gear 31 is shown in arrow A, and the orientation of the thrust force acting on the ring gear 32 is shown in arrow B.

According to the present embodiment, the power transmission device 10 further comprises a load transmission path 40 between the sun gear 31 and the ring gear 32, through which the thrust force acting on the sun gear 31 and the thrust force acting on the ring gear 32 are transmitted. The load transmission path 40 is configured by including at least a portion of the carrier 34.

Details of the load transmission path 40 will be described. As mentioned above, the load transmission path 40 is a path through which the load is transmitted between the sun gear 31 and the ring gear 32. In other words, the load transmission path 40 is a path between the sun gear 31 and the ring gear 32. The load transmission path 40 comprises a path between the sun gear 31 and the carrier 34 and a path between the ring gear 32 and the carrier 34. A first bearing 48 is interposed on the path between the sun gear 31 and the carrier 34. That is, the load transmission path 40 includes the first bearing 48 interposed on the path between the sun gear 31 and the carrier 34. Also, a structure 43 extending from the ring gear 32 and a second bearing 49 are interposed on the path between the ring gear 32 and the carrier 34. That is, the load transmission path 40 includes the structure 43 extending from the ring gear 32 and the second bearing 49 interposed on the path between the ring gear 32 and the carrier 34.

The first bearing 48 is disposed between the sun gear 31 and a first section 41 of the differential case 35. That is, the first bearing 48 is sandwiched between the sun gear 31 and the differential case 35. The first bearing 48 is a bearing subjected to the thrust force. The second bearing 49 is disposed between the structure 43 and a second section 42 of the carrier 34. That is, the second bearing 49 is sandwiched between the structure 43 and the carrier 34. The second bearing 49 is a bearing subjected to the thrust force.

The first section 41 and the second section 42 are located at different positions each other in the axial direction, but as mentioned above, the carrier 34 and the differential case 35 are connected with each other, and thus the first section 41 and the second section 42 are connected as a physical object. In FIG. 3, how the first section 41 and the second section 42 are connected with each other is illustrated in a simplified form by broken lines. The first section 41 is a portion of the differential case 35 that is close to the sun gear 31 in the axial direction. The second section 42 is a portion of the carrier 34 which includes a part of the supporting shafts 34a that is on the other side (left in FIG. 3) of the small-diameter pinions 33b and/or the bosses 34b or which is at or near that part of the supporting shafts 34a and/or the bosses 34b. Also, according to FIG. 3, the second section 42 can be regarded as being on the one side (right in FIG. 3) in the axial direction relative to the end of the carrier 34 in the other side in the axial direction.

The structure 43 extends outward from the end of the ring gear 32 on the other side (left in FIG. 3) in the axial direction to cover a part of the carrier 34, for example, ends of the supporting shafts 34a and/or the bosses 34b, etc. from the other side.

The structure 43 is fixed to the ring gear 32. There may be various ways for fixing the structure 43 and the ring gear 32. The structure 43 and the ring gear 32 are for example fixed by welding. The structure 43 may be fixed to the ring gear 32 in a manner of the structure 43 being press-fitted between the inner surface 12a of the first chamber 12 to which the ring gear 32 is fixed and a recess formed in the ring gear 32. The structure 43 and the ring gear 32 may be fixed to each other via an unillustrated fixing member.

Alternatively, the structure 43 may be integrally molded with the ring gear 32. That is, the structure 43 and the ring gear 32 may be collectively a single member. By pre-shaping the ring gear 32 in a shape including the structure 43, the structure 43 as an independent member can be omitted, and thus assembly of the power transmission device 10 can be simplified. Here, an end 43b of the structure 43 opposite from the end 43a of the side connected with the ring gear 32 is apart from the case 11.

According to the load transmission path 40 as such, the first bearing 48 is subjected to the thrust force oriented as shown in the arrow A and acting on the sun gear 31. The thrust force which the first bearing 48 was subjected to is transmitted from the first section 41 to the carrier 34. Such thrust force travels further through the second section 42 of the carrier 34, the second bearing 49, and the structure 43, and reaches the ring gear 32.

On the other hand, the thrust force oriented as shown in the arrow B acts on the ring gear 32. Conventionally, this thrust force had been supported by the case 11, but in the present embodiment, the ring gear 32 further has the thrust force acting on the sun gear 31 transmitted thereto. Accordingly, in the ring gear 32 or the load transmission path 40, the thrust force acting on the sun gear 31 and the thrust force acting on the ring gear 32 are cancelled by each other, and only an excess thrust force, which was not cancelled, is inputted to the case 11.

As such, according to the power transmission device 10 of the present embodiment, each of the sun gear 31 and the ring gear 32 is a helical gear, and the helix angle of the teeth of the sun gear 31 and the helix angle of the teeth of the ring gear 32 are set so that the thrust force acting on the sun gear 31 and the thrust force acting on the ring gear 32 are in opposite directions. Further, providing the load transmission path 40 between the sun gear 31 and the ring gear 32 can reduce the thrust force inputted to the case 11 as compared to the conventional ones. Accordingly, the rigidity required for the case 11 so as to withstand the thrust force acting on the ring gear 32 can be decreased, by which the size of the case 11 can be suppressed from being large, and/or freedom of degree in case shapes can be increased. Also, since the load transmission path 40 contains at least a portion of the carrier 34 which the planetary gear mechanism 30 inherently requires, when providing the load transmission path 40, the number of components can be suppressed.

Also, according to the present embodiment, the load transmission path 40 includes the first bearing 48 interposed in the path between the sun gear 31 and the carrier 34, and the second bearing 49 interposed in the path between the ring gear 32 and the carrier 34. According to the above-mentioned configuration, because the first bearing 48 and the second bearing 49 are used to constitute the load transmission path 40, the load transmission path 40 can be configured to ensure smooth rotation of the sun gear 31 and/or carrier 34 and suppress the number of parts from increasing.

Also, according to the present embodiment, the carrier 34 is connected to the differential case 35 which houses the differential gear 50, and the first bearing 48 is sandwiched between the sun gear 31 and the differential case 35. According to the above-mentioned configuration, in this type of the power transmission device 10 in which the carrier 34 is connected to the differential case 35 which houses the differential gear 50, the load transmission path 40 can be simply configured by utilizing the differential case 35.

Also, according to the present embodiment, the load transmission path 40 includes the structure 43 extending from the ring gear 32, and the second bearing 49 is sandwiched between the structure 43 and the carrier 34. According to the above configuration, by utilizing the structure 43 to constitute the load transmission path 40, the load transmission path 40 can be easily configured.

Further, with reference to FIG. 3, the load transmission path 40 can be regarded as being arranged on the other side (left in FIG. 3) of the large-diameter pinions 33a in the axial direction, that is, at or near the small-diameter pinions 33b. That is, when the planetary gears 33 are stepped pinions with the large-diameter pinions 33a and the small-diameter pinions 33b, the shapes of the stepped pinions can be effectively utilized, and in the axial direction the load transmission path 40 is disposed at or near the small-diameter pinions 33b instead of at or near the large-diameter pinions 33a. This enables simple configuration of the load transmission path 40, and thus the size of the case 11 which houses the load transmission path 40 can be suppressed from being large.

According to the present embodiment, the helix angle of the teeth of the sun gear 31 and the helix angle of the teeth of the ring gear 32 are set so that the thrust force acting on the sun gear 31 and the thrust force acting on the ring gear 32 are in opposite directions. In such a configuration, the helix angle of the teeth of the sun gear 31 and the helix angle of the teeth of the ring gear 32 may be set so that a magnitude of the thrust force acting on the sun gear 31 and a magnitude of the thrust force acting on the ring gear 32 are equal to each other. For example, by conducting an experiment or simulation where the power transmission device 10 is operated under standard use conditions, the thrust force acting on the sun gear 31 and the thrust force acting on the ring gear 32 are measured and/or calculated, in which respective parameters including the helix angles of the teeth of each of the sun gear 31 and the ring gear 32 are set so that the magnitudes of the thrust force acting on the sun gear 31 and the thrust force acting on the ring gear 32 become equal to each other. According to such configuration, the thrust force acting on the sun gear 31 and the thrust force acting on the ring gear 32 can be cancelled by each other in the load transmission path 40, ideally completely, by which the thrust force inputted from the ring gear 32 to the case 11 can be made zero.

Specific configuration of the load transmission path 40 is not limited to the illustrated configuration. The load transmission path 40 simply needs to be a path which connects the sun gear 31 and the ring gear 32 with each other, includes at least a portion of the carrier 34, and through which the thrust force acting on the sun gear 31 and the thrust force acting on the ring gear 32 are transmitted. Also, the configuration of the power transmission device 10 may include various modifications. For example, functions of the carrier 34 and the differential case 35 may be divided. Also, the positional relationship between the rotor shaft 23, the carrier 34, and the differential case 35 may not be limited to the illustrated relationship. Also, the carrier 34 may be on the input side and the sun gear 31 may be on the output side, instead of having the sun gear 31 as the input and the carrier 34 as the output. The planetary gears may not be of stepped pinions.

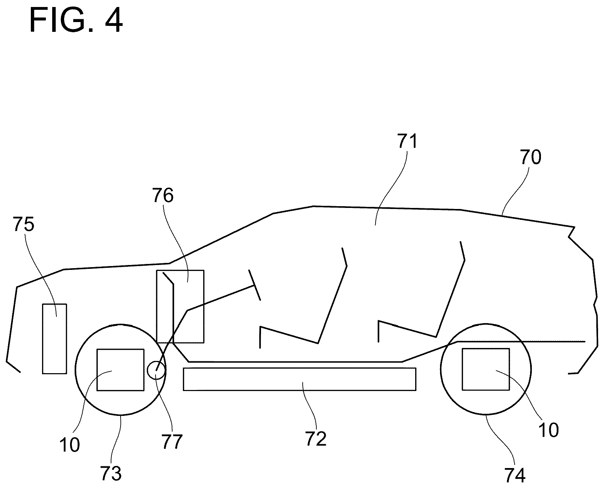

FIG. 4 schematically illustrates a side view of a vehicle 70 in which the power transmission device 10 is mounted. The vehicle 70 has a battery 72 configured to be rechargeable installed under a floor of a passenger compartment 71. The vehicle 70 is configured to travel by driving the motor 20 with electric power supplied from the battery 72, and is for example, a BEV (Battery Electric Vehicle) or PHEV (Plug-in Hybrid Electric Vehicle). According to FIG. 4, the power transmission device 10 is mounted coaxially with a front wheel 73 of the vehicle 70, and another power transmission device 10 is mounted coaxially with a rear wheel 74 of the vehicle 70. If the vehicle 70 is a front/rear wheel drive vehicle, only one of the front and rear power transmission devices 10 shown in FIG. 4 is necessary, and if the vehicle 70 is a four-wheel drive vehicle, both of the front and rear power transmission devices 10 are necessary.

By arranging the power transmission device 10 being a unit shown in FIG. 2 coaxially with the wheel, the height position of such unit can be relatively lowered. As a result of this, on the front side of the vehicle 70, degree of freedom in arranging respective features such as a radiator 75, an air-conditioning control system 76 configured to control space heating, ventilation, and air conditioning, and/or an electric power steering (EPS) 77 can be improved, by which space of the passenger compartment 71 can be ensured greater. Also, on the rear side of the vehicle 70, this leads to ensuring a luggage space, and/or improvement in degree of freedom of rear seat design.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A power transmission device (10) comprising a planetary gear mechanism (30) and a case (11) housing the planetary gear mechanism (30),
wherein the planetary gear mechanism (30) comprises:
a sun gear (31) fixed to a shaft configured to rotate;
a ring gear (32) located coaxially with the sun gear (31) and fixed to the case (11);
a planetary gear (33) meshed with the sun gear (31) and the ring gear (32); and
a carrier (34) configured to rotatably support the planetary gear (33), the carrier (34) being located coaxially with the sun gear (31) and supported rotatably with respect to the case (11),
wherein the sun gear (31) and the ring gear (32) are each a helical gear,
a helix angle of teeth of the sun gear (31) and a helix angle of teeth of the ring gear (32) are set so that a thrust force acting on the sun gear (31) and a thrust force acting on the ring gear (32) are in opposite directions,
the power transmission device (10) further comprises a load transmission path (40) between the sun gear (31) and the ring gear (32), through which the thrust force acting on the sun gear (31) and the thrust force acting on the ring gear (32) are transmitted, and
the load transmission path (40) includes at least a portion of the carrier (34).

2. The power transmission device (10) according to claim 1, wherein the load transmission path (40) includes a first bearing (48) interposed on a path between the sun gear (31) and the carrier (34) and a second bearing (49) interposed on a path between the ring gear (32) and the carrier (34).

3. The power transmission device (10) according to claim 2, wherein the carrier (34) is connected to a differential case (35) housing a differential gear (50), and
the first bearing (48) is sandwiched between the sun gear (31) and the differential case (35).

4. The power transmission device (10) according to claim 2 or 3, wherein the load transmission path (40) includes a structure (43) extending from the ring gear (32), and
the second bearing (49) is sandwiched between the structure (43) and the carrier (34).

5. The power transmission device (10) according to claim 4, wherein the structure (43) is integrally molded with the ring gear (32).

6. The power transmission device (10) according to one of claims 1 to 5, wherein the planetary gear (33) is a stepped pinion having a large-diameter pinion (33a) meshed with the sun gear (31) on one side in an axial direction parallel to the shaft and a small-diameter pinion (33b) meshed with the ring gear (32) on another side in the axial direction, and
the load transmission path (40) is provided on the other side of the large-diameter pinion (33a) in the axial direction.

7. The power transmission device (10) according to one of claims 1 to 6, the helix angle of the teeth of the sun gear (31) and the helix angle of the teeth of the ring gear (32) are set so that a magnitude of the thrust force acting on the sun gear (31) and a magnitude of the thrust force acting on the ring gear (32) are equal to each other.
